# EUROPEAN PATENT APPLICATION

(11) **EP 4 350 863 A1**
(43) Date of publication of application: **10.04.2024**
(21) Application number: 22871523.1
(22) Date of filing: 28.06.2022
(51) Int. Cl.: H01M 50/249, H01M 50/24, H01M 10/613, H01M 10/625, H01M 10/6565, H01M 10/6568

(54) **BOX, BATTERY, AND ELECTRICAL DEVICE**

(30) Priority: 27.09.2021 CN 202122354777 U
(71) Applicant: Contemporary Amperex Technology Co., Limited, Ningde, Fujian 352100 (CN)
(72) Inventor: WANG, Yong, Ningde, Fujian 352100 (CN); YANG, Hui, Ningde, Fujian 352100 (CN)
(74) Representative: Thoma, Michael
(86) International application number: PCT/CN2022/101817
(87) International publication number: WO 2023/045462

(57) **Abstract**

This application provides a box, a battery, and an electric apparatus. The box includes a frame, a base plate, a fastener, a sealing member, and a connecting member. The base plate and the frame enclose an accommodating cavity. The fastener includes a body, a flange portion, and a stop portion, where the flange portion is disposed at one end of the body, the stop portion is formed around the body, at least part of the frame and at least part of the base plate are sandwiched between the flange portion and the stop portion, and an annular boss is formed on a side of the flange portion farther away from the body. The sealing member fits around and abuts against the annular boss. The connecting member is configured to connect to the fastener so that the sealing member is sandwiched between the flange portion and the connecting member. In the box provided in this application, the sealing member is sandwiched between the flange portion and the connecting member, which can effectively reduce the area occupied by such structure on the base plate, and leave space for arrangement of other structures, thus optimizing the internal arrangement of the box, improving the flexibility and reliability of arrangement of related structures such as flow channels on the base plate, and improving the safety of the box during operation.

## Description

### CROSS-REFERENCE TO RELATED APPLICATIONS

This application claims priority to Chinese Patent Application No. 202122354777.6, filed on September 27, 2021 and entitled "BOX, BATTERY, AND ELECTRIC APPARATUS", which is incorporated herein by reference in its entirety.

### TECHNICAL FIELD

This application relates to the field of battery technologies, and in particular, to a box, a battery, and an electric apparatus.

### BACKGROUND

Energy conservation and emission reduction are crucial to the sustainable development of the automotive industry. Electric apparatuses such as electric vehicles, with their advantages in energy conservation and emission reduction, have become an important part of sustainable development of the automobile industry. For electric apparatuses, battery technology is an important factor in connection with their development.

Boxes of batteries play a sealing role to prevent water from entering the interior of the boxes and corroding battery cells. However, the structural defects of boxes restrict the arrangement of related structures of batteries, resulting in some safety hazards.

### SUMMARY

This application provides a box, a battery, and an electric apparatus, which can improve the flexibility of arrangement of battery-related structures and the working safety of batteries.

According to an aspect, this application provides a box applied to battery, where the box includes: a frame; a base plate, where the base plate and the frame enclose an accommodating cavity; a fastener, including a body, a flange portion, and a stop portion, where the flange portion is disposed at one end of the body, the stop portion is formed around the body, at least part of the frame and at least part of the base plate are sandwiched between the flange portion and the stop portion, and an annular boss is formed on a side of the flange portion farther away from the body; a sealing member, fitting around and abutting against the annular boss; and a connecting member, configured to connect to the fastener so that the sealing member is sandwiched between the flange portion and the connecting member.

According to the box provided in this application, the sealing member is sandwiched between the flange portion and the connecting member, that is, at least part of the sealing member is arranged between a surface of the fastener facing towards the base plate and the base plate, rather than all being disposed on the outside around the flange portion. In this way, the total area of the base plate for connecting the frame can be effectively reduced, so as to leave space for the arrangement of other structures on the base plate, thus improving the flexibility and reliability of arrangement of other structures such as flow channels on the base plate, optimizing the thermal management system inside the box, and improving the safety of the box during operation.

According to an embodiment of this application, the sealing member abuts against the outer side of the annular boss in a radial direction; and/or the sealing member abuts against the inner side of the annular boss in a radial direction. Such arrangement allows the sealing member to seal the joint of the base plate and the frame.

In the foregoing solution, at least part of the sealing member can be sandwiched between the surface of the annular boss facing towards the connecting member and the connecting member, so that the fastener and the sealing member at least partially overlap in an axial direction of the fastener, making the total area for arrangement of the fastener and the sealing member on the base plate smaller. This can reduce the area occupied by such structure on the base plate and leave space for arrangement of other structures, thus optimizing the internal arrangement of the box.

According to an embodiment of this application, the flange portion covers the sealing member in a direction of the flange portion facing towards the sealing member.

In the foregoing solution, the sealing member is arranged on a side of the flange portion facing towards the base plate, and in a direction of the flange portion facing towards the sealing member, the flange portion covers the sealing member, so as to minimize the total area for arrangement of the fastener and sealing member on the base plate without changing the maximum radial dimension of the fastener, thus maximizing the area saved and optimizing the internal arrangement of the box.

According to an embodiment of this application, the fastener has a connecting hole, where the connecting hole runs through the flange portion, the body, and the stop portion; and the connecting hole has a threaded hole segment, where the threaded hole segment is on a side of the stop portion farther away from the flange portion, and the connecting member is threadedly connected to the threaded hole segment.

The fastener is a rivet nut, and the connecting member is a bolt. In the foregoing solution, the frame and the base plate are connected by riveted connection, which is convenient and fast to operate and allows for sound and reliable connection of the structures.

According to an embodiment of this application, the box further includes a protective plate, where the connecting member is connected to the fastener through the protective plate, and at least part of the protective plate is sandwiched between the connecting member and the sealing member.

In the foregoing solution, the protective plate is configured to protect the base plate of the box, to reduce the risk of the base plate being deformed or even broken when the box is subjected to impact, vibration, and other forces, thus improving the safety performance of the box during use.

According to an embodiment of this application, the base plate includes a first heat conducting plate and a second heat conducting plate connected to each other, where a flow channel is formed between the first heat conducting plate and the second heat conducting plate; and at least part of the first heat conducting plate and at least part of the second heat conducting plate are sandwiched between the flange portion and the stop portion.

In the foregoing solution, the parts of the first heat conducting plate and second heat conducting plate that are sandwiched between the flange portion and the stop portion can be connected to each other, which is conducive to increasing the connection area between the first heat conducting plate and the second heat conducting plate and improving the overall structural stability of the base plate.

According to an embodiment of this application, the first heat conducting plate is located between the second heat conducting plate and the frame, the first heat conducting plate has a first connecting hole, the second heat conducting plate has a second connecting hole, and the fastener runs through the first connecting hole and the second connecting hole, the second connecting hole being larger than the first connecting hole in diameter.

In the foregoing solution, the second connecting hole is set larger than the first connecting hole in diameter, so that when the first heat conducting plate and second heat conducting plate are installed with a small position deviation, the first connecting hole can still be exposed through the second connecting hole and the fastener can still be inserted into the first connecting hole through the second connecting hole, reducing the possibility of the fastener being unable to insert into the first connecting hole and the second connecting hole due to the misalignment of the first heat conducting plate and the second heat conducting plate.

According to an embodiment of this application, the base plate further includes a welding layer, where the welding layer is disposed between the first heat conducting plate and the second heat conducting plate to connect the first heat conducting plate and the second heat conducting plate.

In the foregoing solution, the first heat-conducting plate and the second heat-conducting plate are connected by welding, and the welding points can be distributed around the riveted structure. This can effectively improve the connection strength of the first heat conducting plate and the second heat conducting plate, and improve the sealing performance of the flow channel between the first heat conducting plate and the second heat conducting plate, thus reducing the risk of flow channel sealing failure.

According to a second aspect, an embodiment of this application provides a battery including: the box according to any of the foregoing embodiments; and a battery cell accommodated in the accommodating cavity of the box.

According to a third aspect, an embodiment of this application provides an electric apparatus including the battery according to the foregoing embodiments, where the battery is configured to supply electric energy.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and persons of ordinary skill in the art may still derive other drawings from the accompanying drawings without creative efforts.
FIG 1 is a schematic structural diagram of a vehicle according to some embodiments of this application;
FIG 2 is a schematic exploded view of a box according to an embodiment of this application;
FIG 3 is a schematic structural diagram of a box according to some embodiments of this application;

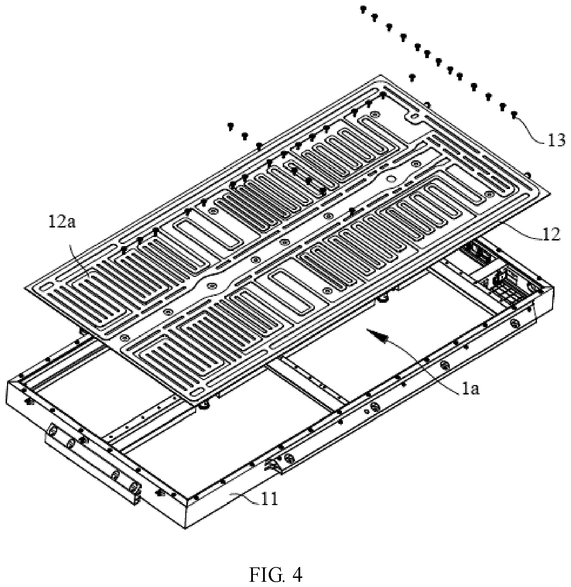

FIG 4 is a schematic structural exploded view of a box according to some embodiments of this application;
FIG 5 is a schematic structural diagram of a fastener according to some embodiments of this application;
FIG 6 is a schematic structural cross-sectional view of a box in an N-N direction in FIG 3;
FIG 7 is another schematic structural cross-sectional view of a box in an N-N direction in FIG 3; and
FIG 8 is a schematic structural cross-sectional view in still another embodiment of a box in an N-N direction in FIG 3.

The accompanying drawings are not drawn to scale.

Reference signs are described as follows:
100. vehicle; 100a. motor; 100b. controller; 10. battery;
1. box; 1a. accommodating cavity; 11. frame; 12. base plate; 12a. flow channel; 121. first heat conducting plate; 121a. first connecting hole; 122. second heat conducting plate; 122a. second connecting hole; 13. fastener; 13a. connecting hole; 13a'. threaded hole segment; 131. body; 132. flange portion; 1321. annular boss; 133. stop portion; 14. sealing member; 15. connecting member; 16. protective plate;
3. first box; and 4. second box.

### DESCRIPTION OF EMBODIMENTS

The following further describes implementations of this application in detail with reference to accompanying drawings and embodiments. The detailed description of the following embodiments and the accompanying drawings are used to exemplarily illustrate the principle of this application, but cannot be used to limit the scope of this application, that is, this application is not limited to the described embodiments.

In the descriptions of this application, it should be noted that, unless otherwise stated, "plurality" means two or more; and the orientations or positional relationships indicated by the terms "upper", "lower", "left", "right", "inside", "outside", and the like are merely intended to help the descriptions of this application and simplify the descriptions other than indicate or imply that the apparatuses or components must have specific orientations, or be constructed and manipulated with specific orientations, and therefore shall not be construed as limitations on this application. In addition, the terms "first", "second", and "third" are merely intended for a purpose of description, and shall not be understood as an indication or implication of relative importance. "Vertical" means being vertical with an allowable range of error other than being strictly vertical. "Parallel" means being parallel with an allowable range of error other than being strictly parallel.

The orientation terms appearing in the following description all are directions shown in the figures, and do not limit the specific structure of the application. In the descriptions of this application, it should be further noted that unless otherwise specified and defined explicitly, the terms "installment", "link", and "connection" should be understood in their general senses. For example, the terms may be a fixed connection, a detachable connection, or an integrated connection, or may be a direct connection, or an indirect connection through an intermediate medium. A person of ordinary skill in the art can understand specific meanings of these terms in this application based on specific situations.

The box of batteries typically includes a frame and a base plate, the base plate is connected to the frame by a connection structure, and the base plate is typically provided with related structures such as a flow channel to perform heat management on battery cells in the box. However, the inventors have found that due to the large area occupied by the connection structure of the base plate and the frame, the arrangement positions and arrangement area of the flow channel and other related structures on the base plate are restricted, and the flow channel and other related structures cannot be flexibly and properly arranged on the base plate, which limits the arrangement area of the flow channel and reduces the space utilization of the base plate. Moreover, the base plate brings some safety hazards to the batteries.

In view of the foregoing problems discovered by the inventors, the inventors have improved the structure of the box. The technical solution described in the embodiments of this application is applicable to the box, batteries including the box and electric apparatuses using the battery.

The electric apparatus may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, and an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric device.

For ease of description, the electric apparatus being a vehicle is used as example for description of the following embodiments.

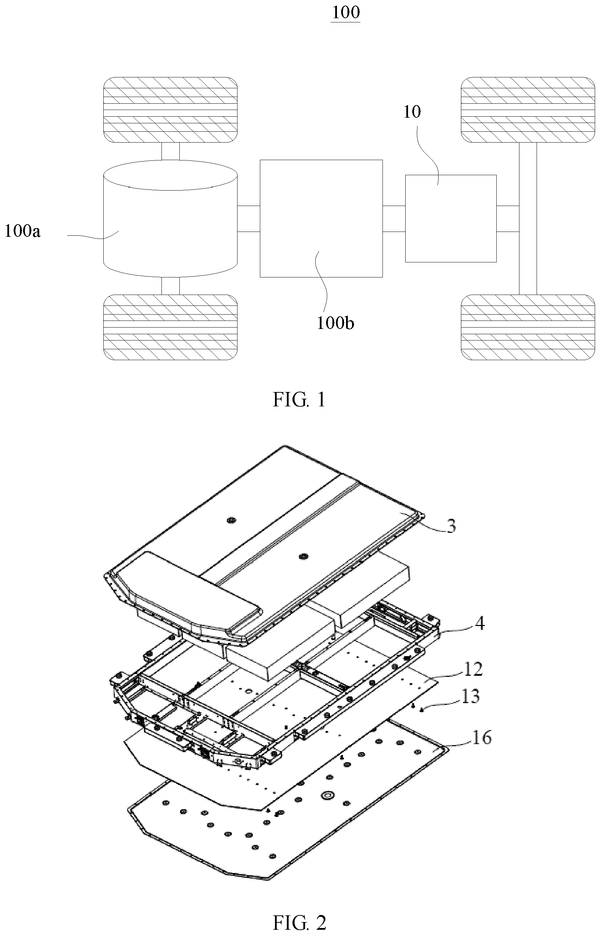

Referring to FIG 1, FIG 1 is a schematic structural diagram of a vehicle 100 according to some embodiments of this application.

As shown in FIG 1, the vehicle 100 is provided with a battery 10 inside. The battery 10 can be provided at the bottom, head, or tail of the vehicle 100. The battery 10 may be configured to supply power to the vehicle 100. For example, the battery 10 may be used as an operational power source for the vehicle 100.

The vehicle 100 may further include a motor 100a and a controller 100b. The controller 100b is configured to control the battery 10 to supply power to the motor 100a, for example, to satisfy power needs of start, navigation, and driving of the vehicle 100.

In some embodiments of this application, the battery 10 can be used as not only the operational power source for the vehicle 100 but also a driving power source for the vehicle 100, replacing or partially replacing fossil fuel or natural gas to provide driving traction for the vehicle 100.

Referring to FIG 2, FIG 2 is a schematic exploded view of the battery 10 according to some embodiments of this application.

As shown in FIG 2, the battery 10 includes a box 1 and a battery cell 2, and the battery cell 2 is accommodated in the box 1. The box 1 may be of various structures. In some embodiments, the box 1 may include a first box portion 3 and a second box portion 4. The first box portion 3 and the second box portion 4 fit together to jointly define an accommodating space for accommodating the battery cell 2. The second box portion 4 may be a hollow structure with an opening formed at an end, the first box portion 3 is a plate-shaped structure, and the first box portion 3 covers the opening side of the second box portion 4 so as to form the box 1 having the accommodating space; alternatively, the first box portion 3 and the second box portion 4 may each be a hollow structure with an opening formed at an end, and the opening side of the first box portion 3 is engaged with the opening side of the second box portion 4 so as to form the box 1 having the accommodating space. Assuming that the first box portion 3 fits on the top of the second box portion 4, the first box portion 3 may also be referred to as an upper box cover, and the second box portion 4 may also be referred to as a lower box.

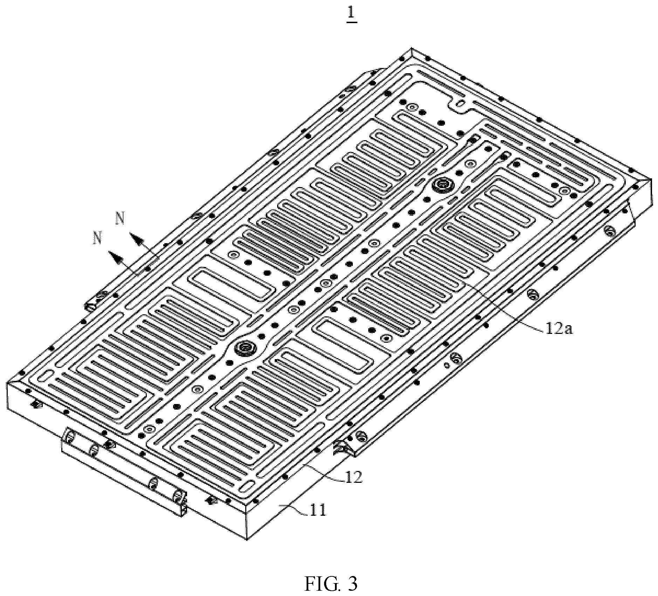

Referring to FIG 2 and FIG 3, the embodiments of this application provide a box 1 applied to a battery 10, the box 1 may include a first box portion 3 and a second box portion 4, and the first box portion 3 or the second box portion 4 (the second box portion 4 is used as an example in FIG 2) may include a frame 11, a base plate 12, a fastener 13, a sealing member 14, and a connecting member 15. The base plate 12 and the frame 11 enclose an accommodating cavity 1a. The fastener 13 includes a body 131, a flange portion 132, and a stop portion 133. The flange portion 132 is disposed at one end of the body 131, the stop portion 133 is formed around the body 131, at least part of the frame 11 and at least part of the base plate 12 are sandwiched between the flange portion 132 and the stop portion 133, and an annular boss 1321 is formed on a side of the flange portion 132 farther away from the body 131. The sealing member 14 fits around and abuts against the annular boss 1321. The connecting member 15 is configured to connect to the fastener 13 so that the sealing member 14 is sandwiched between the flange portion 132 and the connecting member 15.

Specifically, the accommodating cavity 1a of the box 1 is used to accommodate the battery cell 2. The flange portion 132 may be integrally formed with the body 131, or may be separately formed and then connected into an integrated structure by welding or the like. The stop portion 133 may be formed during the manufacture of the fastener 13, or may be formed through a process such as riveted connection after the fastener 13 is connected to the connecting member 15. The sealing member 14 abuts against the annular boss 1321, which can prevent water or the like from outside the box 1 from entering the accommodating cavity 1a through the mounting hole on the base plate 12 and the box 1. Therefore, the sealing member 14 can be used to guarantee the sealing performance of the joint between the base plate 12 and the frame 11. Compared with the connection method that the sealing member 14 is provided on an outer peripheral side of the flange portion 132, the sealing member 14 being sandwiched between the flange portion 132 and the connecting member 15 can effectively prevent the sealing member 14 from additionally occupying the connection area between the base plate 12 and the frame 11, thus effectively reducing the connection area of the frame 11 and the base plate 12.

In the box 1 provided in the embodiments of this application, the sealing member 14 is sandwiched between the flange portion 132 and the connecting member 15, that is, at least part of the sealing member 14 is arranged between a surface of the fastener 13 facing towards the base plate 12 and the base plate 12, rather than all being disposed on the outside around the flange portion 132. Such arrangement can effectively reduce the connection area of the base plate 12 and the frame 11, improve the flexibility and reliability of arrangement of related structures such as a flow channel 12a on the base plate 12, and optimize the thermal management system inside the box 1, thus improving the safety of the box 1 during operation.

It should be understood that the sealing member 14 may abut against the outer side of the annular boss 1321 in a radial direction or abut against the inner side of the annular boss 1321 in the radial direction, or the sealing member 14 may be provided on both the outer side and inner side of the annular boss 1321 in the radial direction. In all cases, the sealing member 14 can seal the joint between the base plate 12 and the frame 11.

In some embodiments, a sealant may be applied to the joint surface between the flange portion 132 of the fastener 13 and the base plate 12, so as to better seal the joint between the base plate 12 and the frame 11, thus improving the sealing performance of the accommodating cavity 1a of the box 1.

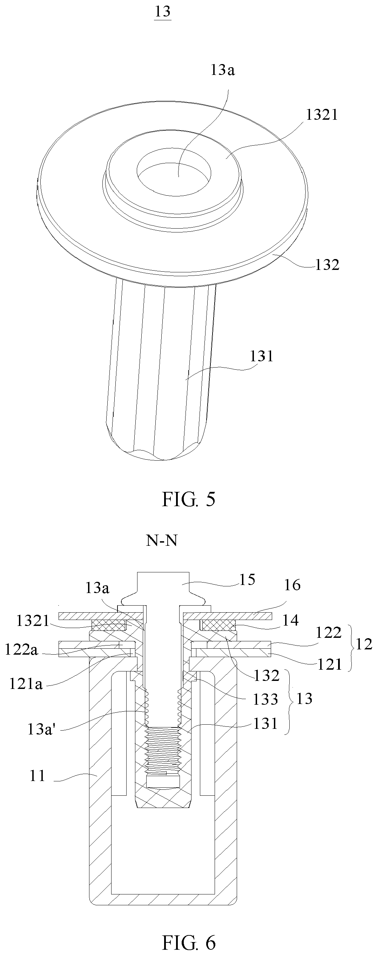

In some embodiments, as shown in FIG 6, the sealing member 14 abuts against the outer side of the annular boss 1321 in a radial direction. In this case, the sealing member 14 can prevent external water from entering the accommodating cavity 1a through the outer side of the fastener 13.

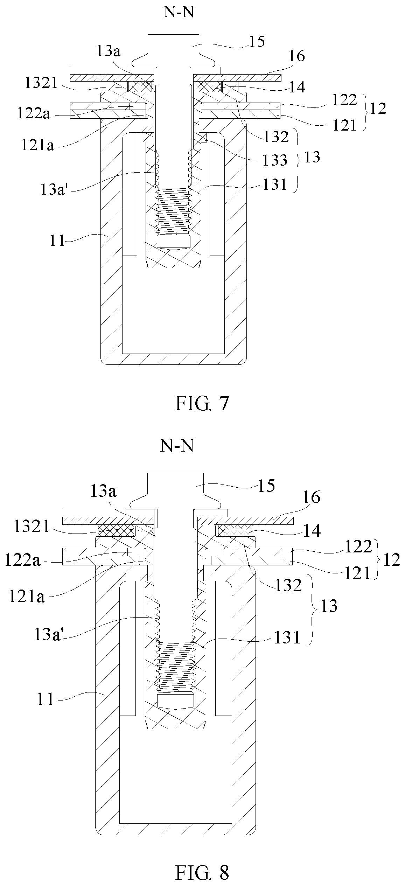

In some other embodiments, as shown in FIG 7, the sealing member 14 abuts against the inner side of the annular boss 1321 in a radial direction. In this case, the sealing member 14 can prevent external water from entering the accommodating cavity 1a through the inner side of the fastener 13.

It should be understood that the sealing member 14 may be entirely located between the flange portion 132 and the connecting member 15, or may be partially located between the flange portion 132 and the connecting portion. In both cases, the sealing member 14 can be prevented from additionally occupying the connection area between the base plate 12 and the frame 11, thus reducing the connection area between the frame 11 and the base plate 12.

With the sealing member 14 abutting against the outer or inner side of the annular boss 1321 in the radial direction, at least part of the sealing member 14 can be sandwiched between the surface of the annular boss 1321 facing towards the connecting member 15 and the connecting member 15, so that the fastener 13 and the sealing member 14 at least partially overlap in the axial direction, making the total area for arrangement of the fastener 13 and the sealing member 14 on the base plate 12 smaller. This can reduce the area occupied by such structure on the base plate 12 and leave space for arrangement of other structures, thus optimizing the internal arrangement of the box 1.

In some embodiments, the flange portion 132 covers the sealing member 14 in a direction of the flange portion 132 facing towards the sealing member 14.

Specifically, the outer edge of the sealing member 14 may be flush with the outer edge of the flange portion 132; or the outer edge of the sealing member 14 may be located on the inner side of the outer edge of the flange portion 132, that is, the sealing member 14 is arranged on the inner side of the fastener 13 in the radial direction. With such arrangement, the sealing member 14 can be arranged on a side of the flange portion 132 facing towards the base plate 12, and in a direction of the flange portion 132 facing towards the sealing member 14, the flange portion 132 covers the sealing member 14, so as to minimize the total area for arrangement of the fastener 13 and the sealing member 14 on the base plate 12 without changing the maximum radial dimension of the fastener 13, thus maximizing the area saved and optimizing the internal arrangement of the box 1.

The connecting member 15 may be connected to the outer side or inner side of the fastener 13 in the radial direction, provided that the sealing member 14 can be sandwiched between the fastener 13 and the connecting member 15.

In some embodiments, as shown in FIG 6 to FIG 8, the fastener 13 has a connecting hole 13a, where the connecting hole 13a runs through the flange portion 132, the body 131, and the stop portion 133. The connecting hole 13a has a threaded hole segment 13a', where the threaded hole segment 13a' is located on a side of the stop portion 133 farther away from the flange portion 132, and the connecting member 15 is threadedly connected to the threaded hole segment 13a'.

Specifically, the fastener 13 runs through the base plate 12 and the frame 11, and the fastener 13 has not formed the stop portion 133 until the fastener 13 is threadedly connected to the connecting member 15. The connecting member 15 needs to run through the sealing member 14 and then through the connecting hole 13a corresponding to the flange portion 132, body 131, and stop portion 133 of the fastener 13 to threadedly connect to the threaded hole segment 13a'. That means the threaded hole segment 13a' is located on the side of the stop portion 133 farther away from the flange portion 132. The stop portion 133 has not formed before the connecting member 15 is threadedly connected to the threaded hole segment 13a'. The connecting member 15 is rotated, and the connecting member 15 is threadedly connected to the threaded hole segment 13a', resulting in a relative displacement between the two. The connecting member 15 cannot go any further due to a stopping effect of the sealing member 14 on the connecting member 15, and the fastener 13 keeps deforming towards the connecting member 15 until the stop portion 133 is formed on the side of the frame 11 farther away from the base plate 12, so as to leave the base plate 12 and the frame 11 sandwiched between the stop portion 133 and the flange. Then rotation of the connecting member 15 is stopped, and a stable connection between the frame 11 and the base plate 12 is formed.

FIG 6 and FIG 7 are schematic structural diagrams with the stop portion 133 formed after the fastener 13 and the connecting member 15 are riveted together, while FIG 8 is a schematic structural diagram without the stop portion 133 formed before the fastener 13 and the connecting member 15 are riveted together.

It should be understood that in this embodiment, the frame 11 and the base plate 12 are connected by riveting. The fastener 13 is a rivet nut, the connecting member 15 is a bolt, and the frame 11 and the base plate 12 are connected by riveting, which is convenient and fast to operate and makes the connection structure stable and reliable.

The base plate 12 may be used as the outermost part of the box 1, or a related structure may be provided on the side of the base plate 12 farther away from the frame 11 to protect the base plate 12.

In some embodiments, the box 1 further includes a protective plate 16, where the connecting member 15 is connected to the fastener 13 through the protective plate 16, and at least part of the protective plate 16 is sandwiched between the connecting member 15 and the sealing member 14.

At least part of the protective plate 16 is sandwiched between the connecting member 15 and the sealing member 14, so as to fasten the protective plate 16. The sealing member 14 is sandwiched between the flange portion 132 and the protective plate 16, and the sealing member 14 is still sandwiched between the flange portion 132 and the connecting member 15, except that the sealing member 14 is no longer connected to the connecting member 15 through direct contact, but is connected to the connecting member 15 through the protective plate 16.

The protective plate 16 is disposed for protecting the base plate 12 of the box 1, so as to reduce the risk of the base plate 12 being deformed or even broken when the box 1 is subjected to impact, vibration, and other forces, thus improving the safety performance of the box 1 during use.

It should be understood that the base plate 12 may be used solely to connect to the frame 11 to form the accommodating cavity 1a, that is, the base plate acts as a part of the box 1 to improve the structural strength of the box 1 and form the closed accommodating cavity 1a. Alternatively, other structures may be integrated on the base plate 12 to implement corresponding functions. In this way, multiple functions can be integrated on the base plate 12 to improve the structural integration of the box 1.

In some embodiments, the base plate 12 includes a first heat conducting plate 121 and a second heat conducting plate 122 connected to each other, where a flow channel 12a is formed between the first heat conducting plate 121 and the second heat conducting plate 122. At least part of the first heat conducting plate 121 and at least part of the second heat conducting plate 122 are sandwiched between the flange portion 132 and the stop portion 133.

Specifically, a flowing medium may be injected to the flow channel 12a. The flowing medium may be liquid, gas, or the like. The flowing medium exchanges heat with the first heat conducting plate 121 and the second heat conducting plate 122 as it flows in the flow channel 12a. It should be understood that when the electric apparatus works in cold weather, the box 1 needs to be heated to ensure the normal operation of the battery 10. As the use time of the battery 10 grows, the battery 10 will generate heat, and in this case, the box 1 needs to be cooled to maintain the normal operation of the battery 10. Therefore, in this embodiment, the flowing medium may be a low-temperature flowing medium or high-temperature flow medium with respect to the box 1, so as to cool or heat the box 1.

After the first heat conducting plate 121 and the second heat conducting plate 122 are connected, a flow channel 12a is formed between them. The first heat conducting plate 121 and the second heat conducting plate 122 may be connected by bonding or by welding. Compared with the technical solution that only one of the first heat conducting plate 121 and the second heat conducting plate 122 is sandwiched between the flange portion 132 and the stop portion 133, in this solution, at least part of the first heat conducting plate 121 and at least part of the second heat conducting plate 122 are sandwiched between the flange portion 132 and the stop portion 133, where the parts of the first heat conducting plate 121 and the second heat conducting plate 122 that are sandwiched between the flange portion 132 and the stop portion 133 can be connected to each other. Such arrangement is conducive to increasing the connection area between the first heat conducting plate 121 and the second heat conducting plate 122 and improving the overall structural stability of the base plate 12. In addition, the fastener 13 and the connecting member 15 are both connected to the first heat conducting plate 121 and the second heat conducting plate 122, so that when the box 1 is subjected to impact, the axial length for the fastener 13 and the connecting member 15 to deform can be increased, thus improving the connection strength of the fastener 13 and the connecting member 15, and reducing the risk of failure of the fastener 13 and the connecting member 15 connection upon impact on the box 1.

Moreover, at the joint between the base plate 12 and the frame 11, the connection area between the first heat conducting plate 121 and the second heat conducting plate 122 of the base plate 12 is increased, which increases the distance between the mounting holes on the base plate 12 and the edge of the flow channel 12a formed on the base plate 12. In this way, the sealing performance of the flow channel 12a can be effectively improved, and the risk of sealing failure of the flow channel 12a between the first heat conducting plate 121 and the second heat conducting plate 122 can be reduced.

In the embodiment where the base plate 12 includes the first heat conducting plate 121 and the second heat conducting plate 122 and the flow channel 12a is formed between the two, the sealing member 14 being sandwiched between the flange portion 132 and the connecting member 15 prevents the sealing member 14 from additionally occupying the connection area between the base plate 12 and the frame 11. In this way, the flexibility of arrangement of the flow channel 12a on the base plate 12 can be improved, facilitating proper arrangement of the flow channel 12a based on needs, and helping improve the thermal management performance of the box 1. It can be understood that in order to connect the frame 11 and the base plate 12 by the fastener 13 and the connecting member 15, when in a connected state, the first heat conducting plate 121 and the second heat conducting plate 122 of the base plate 12 each have a hole used for their connection. The holes can be respectively formed during the processing of the first heat conducting plate 121 and the second heat conducting plate 122, or formed during the connection of the first heat conducting plate 121 and the second heat conducting plate 122 to the frame 11, which is not limited herein.

In some embodiments, the first heat conducting plate 121 is located between the second heat conducting plate 122 and the frame 11, the second heat conducting plate 122 has a first connecting hole 121a, and the second heat conducting plate 122 has a second connecting hole 122a. The fastener 13 runs through the first connecting hole 121a and the second connecting hole 122a, the second connecting hole 121a being larger than the first connecting hole 122a in diameter.

Specifically, the first heat conducting plate 121 is located on a side closer to the frame 11 between the frame 11 and the flange portion 132, and the second heat conducting plate 122 is located on a side closer to the flange portion 132. In the connection process of the frame 11 and the base plate 12, the fastener 13 can be inserted through the second connecting hole 122a and the second connecting hole 122a in turn from the outer side of the box 1, the sealing member 14 is fitted around the annular boss 1321, and then the connecting member 15 is securely connected to the fastener 13. During the processing of the first connecting hole 121a and the second connecting hole 122a, when the first heat conducting plate 121 and second heat conducting plate 122 are installed with a small position deviation, the first connecting hole 121a can still be exposed through the second connecting hole 122a, and the fastener 13 can still be inserted into the first connecting hole 121a through the second connecting hole 122a, reducing the possibility of the fastener 13 unable to insert into the first connecting hole 121a and the second connecting hole 122a due to the misalignment of the first heat conducting plate 121 and the second heat conducting plate 122.

In the foregoing embodiment, the flange portion 132 of the fastener 13 is attached to the second heat conducting plate 122, so the sealant between the flange portion 132 and the base plate 12 is applied between the flange portion 132 and the second heat conducting plate 122 to achieve sealed connection therebetween.

It should be understood that the first heat conducting plate 121 and the second heat conducting plate 122 may be bonded by adhesive or the like, or may be connected by welding, which is not limited herein.

In some embodiments, the base plate 12 further includes a welding layer (not shown in the figure), where the welding layer is disposed between the first heat conducting plate 121 and the second heat conducting plate 122 to connect the first heat conducting plate 121 and the second heat conducting plate 122. That is, the first heat conducting plate 121 and the second heat conducting plate 122 are welded together, with the welding points distributed around the riveted structure. This can effectively improve the connection strength of the first heat conducting plate 121 and the second heat conducting plate 122, and improve the sealing performance of the flow channel 12a between the first heat conducting plate 121 and the second heat conducting plate 122, thus reducing the risk of sealing failure of the flow channel 12a.

Optionally, the welding method of the first heat conducting plate 121 and the second heat conducting plate 122 may be one or a combination of fusion welding, pressure welding, or braze welding, all of which can achieve the connection of the first heat conducting plate 121 and the second heat conducting plate 122.

In an optional embodiment, the first heat conducting plate 121 and the second heat conducting plate 122 are connected by braze welding, that is, the welding layer is a brazing layer.

With the first heat conducting plate 121 and the second heat conducting plate 122 being connected by braze welding, the airtightness between them can be improved, and the shape and size of the brazing layer formed are stable, which is conducive to the formation of structures requiring a high dimensional accuracy such as the flow channel 12a. The brazing process does not damage the material tissues and properties of the first heat conducting plate 121 and the second heat conducting plate 122, improving the structural stability of the base plate 12. In addition, during braze welding, the first heat conducting plate 121 or the second heat conducting plate 122 can be entirely heated, and many welding seams can be welded at one time, improving the productivity.

According to some embodiments of this application, the embodiments of this application further provide a battery 10, where the battery 10 includes the box 1 according to any of the foregoing embodiments and a battery cell, and the battery cell is accommodated in the accommodating cavity 1a of the box 1.

The battery 10 provided in the embodiments of this application uses the box 1 according to any of the foregoing embodiments, and therefore achieves the same technical effects. Details are not repeated herein.

According to some embodiments of this application, the embodiments of this application further provide an electric apparatus including the battery 10 in the foregoing embodiments, where the battery 10 is configured to supply electric energy.

The electric apparatus provided in the embodiments of this application uses the battery 10 according to any of the foregoing embodiments, and therefore achieves the same technical effects. Details are not repeated herein.

In conclusion, it should be noted that the above examples are merely intended for describing the technical solutions of this application but not for limiting this application. Although this application is described in detail with reference to the foregoing examples, persons of ordinary skill in the art should understand that they may still make modifications to the technical solutions described in the foregoing examples or make equivalent replacements to some or all technical features thereof without departing from the scope of the technical solutions of the examples of this application. They should all be covered in the scope of claims and summary in this application. In particular, as long as there is no structural conflict, the various technical features mentioned in the embodiments can be combined in any manners. This application is not limited to the specific embodiments disclosed in this specification but includes all technical solutions falling within the scope of the claims.

Although this application has been described with reference to the preferred embodiments, various modifications can be made to this application without departing from the scope of this application and the components therein can be replaced with equivalents. In particular, as long as there is no structural conflict, the various technical features mentioned in the embodiments can be combined in any manners. This application is not limited to the specific embodiments disclosed in this specification but includes all technical solutions falling within the scope of the claims.

## Claims

1. A box applied to battery, wherein the box comprises:
a frame;
a base plate, wherein the base plate and the frame enclose an accommodating cavity;
a fastener, comprising a body, a flange portion, and a stop portion, wherein the flange portion is disposed at one end of the body, the stop portion is formed around the body, at least part of the frame and at least part of the base plate are sandwiched between the flange portion and the stop portion, and an annular boss is formed on a side of the flange portion farther away from the body;
a sealing member fitting around and abutting against the annular boss; and
a connecting member, configured to connect to the fastener so that the sealing member is sandwiched between the flange portion and the connecting member.

2. The box according to claim 1, wherein the sealing member abuts against the outer side of the annular boss in a radial direction; and/or the sealing member abuts against the inner side of the annular boss in a radial direction.

3. The box according to claim 1 or 2, wherein in a direction of the flange portion facing towards the sealing member, the flange portion covers the sealing member.

4. The box according to any one of claims 1 to 3, wherein the fastener has a connecting hole, wherein the connecting hole runs through the flange portion, the body, and the stop portion; and
the connecting hole has a threaded hole segment, wherein the threaded hole segment is on a side of the stop portion farther away from the flange portion, and the connecting member is threadedly connected to the threaded hole segment.

5. The box according to any one of claims 1 to 4, wherein the box further comprises a protective plate, wherein the connecting member runs through the protective plate to connect to the fastener through, and at least part of the protective plate is sandwiched between the connecting member and the sealing member.

6. The box according to any one of claims 1 to 5, wherein the base plate comprises a first heat conducting plate and a second heat conducting plate connected to each other, wherein a flow channel is formed between the first heat conducting plate and the second heat conducting plate; and
at least part of the first heat conducting plate and at least part of the second heat conducting plate are sandwiched between the flange portion and the stop portion.

7. The box according to claim 6, wherein the first heat conducting plate is located between the second heat conducting plate and the frame, the first heat conducting plate has a first connecting hole, the second heat conducting plate has a second connecting hole, and the fastener runs through the first connecting hole and the second connecting hole, the second connecting hole being larger than the first connecting hole in diameter.

8. The box according to claim 6 or 7, wherein the base plate further comprises a welding layer, wherein the welding layer is disposed between the first heat conducting plate and the second heat conducting plate to connect the first heat conducting plate and the second heat conducting plate.

9. A battery, comprising:
the box according to any one of claims 1 to 8; and
a battery cell accommodated in the accommodating cavity of the box.

10. An electric apparatus, comprising the battery according to claim 9, wherein the battery is configured to supply electric energy.
